# EUROPEAN PATENT APPLICATION

(11) **EP 2 341 419 A1**
(43) Date of publication of application: **06.07.2011**
(21) Application number: 09252930.4
(22) Date of filing: 31.12.2009
(51) Int. Cl.: G06F 3/048

(54) **Device and method of control**

(71) Applicant: Sony Computer Entertainment Europe Limited, London W1F 7LP (GB)
(72) Inventor: Webb, Jonathan, London, W1F 7LP (US); Brooks, Matthew, London, W1F 7LP (US); Ankers, Greame, London, W1F 7LP (US); Marshall, Peter John, London, W1F 7LP (US)
(74) Representative: Turner, James Arthur

(57) **Abstract**

A portable electronic device comprises a display on a first, front side of the device, a touch sensitive surface on a second, rear side of the device substantially opposite the first side, and a touch input mapping means arranged to map a position of a detected touch on the touch sensitive surface to a position on the display, in which the touch sensitive surface has a similar shape and orientation to the display, and a touch at a position on the touch sensitive surface causes a display event at a corresponding position on the display.

## Description

The present invention relates to a device and a method of control.

A trend among current portable and pocketable devices such as mobile phones, so-called 'smart-phones', music players, videogames and the like is to become both smaller and to include more features over time. This may be in the form of so-called 'convergence', where, for example, mobile phones now frequently incorporate still or video cameras, or where media players are also capable of playing some video games. Alternatively or in addition, the set of features provided for a particular type of device may increase as implementations of existing device features become more complex.

In either case, one consequence is that the user interface of the device itself also becomes more complex to accommodate control of ever more features. A common approach has therefore been to adopt touch-screens, which have the advantage that controls for different functions are simply graphics to be temporarily displayed on the screen, and hence the physical size of the device no longer imposes a limit on the number of controls possible.

However, such touch screens introduce problems of their own, including that pressing on the display obscures the user's view of what they want to control, and can leave greasy fingerprints on the display.

Conventionally the solution to these problems is to supply a stylus; i.e. a thin, rigid pointer that provides high accuracy of touch location irrespective of the user's hand size, reduces occlusion of the screen during use, and does not leave greasy marks. However, styli are not popular as they can be difficult to access and use in some situations and can easily be lost.

Consequently there is scope for alternative approaches to user input that address or mitigate some or all of these problems.

In a first aspect, a portable electronic device comprises a display on a first, front side of the device, a touch sensitive surface on a second, rear side of the device substantially opposite the first side, and a touch input mapping means arranged to map a position of a detected touch on the touch sensitive surface to a position on the display, in which the touch sensitive surface has a similar shape and orientation to the display, and a touch at a position on the touch sensitive surface causes a display event at a corresponding position on the display.

In another aspect, method of controlling a portable electronic device, the portable electronic device having a display on a first, front side of the device and a touch sensitive surface on a second, rear side of the device substantially opposite the first side such that to the touch panel faces in substantially the opposite direction to the display comprises the steps of mapping a position of a detected touch on the touch sensitive surface to a position on the display so that a touch input with respect to the touch panel is mapped to a corresponding position with respect to the display that is horizontally reversed, and displaying an event at a mapped position on the display in response to a touch at a corresponding position on the touch sensitive surface.

Advantageously, by providing a touch panel mounted on the rear of the device that is located behind the display as viewed by the user, this enables the rear touch panel to be used as a proxy for the screen, hence avoiding the marking and occlusion of the display in use that is associated with touch screens.

Further respective aspects and features of the invention are defined in the appended claims.

Embodiments of the present invention will now be described by way of example with reference to the accompanying drawings, in which:
Figures 1A and 1B are schematic diagrams of an entertainment device in accordance with an embodiment of the present invention.
Figure 2 is a schematic diagram of an entertainment device in accordance with an embodiment of the present invention.
Figure 3 is a schematic diagram of an entertainment device in accordance with an embodiment of the present invention.
Figures 4A and 4B are schematic diagrams of an entertainment device being used in accordance with an embodiment of the present invention.
Figure 5 is a schematic diagram of an entertainment device being used in accordance with an embodiment of the present invention.
Figures 6A and 6B are schematic diagrams of an entertainment device being used in accordance with an embodiment of the present invention.
Figure 7 is a flow diagram of a method of control in accordance with an embodiment of the present invention.

A device and a method of control are disclosed. In the following description, a number of specific details are presented in order to provide a thorough understanding of the embodiments of the present invention. It will be apparent, however, to a person skilled in the art that these specific details need not be employed to practise the present invention. Conversely, specific details known to the person skilled in the art are omitted for the purposes of clarity where appropriate.

In an example embodiment of the present invention, a portable electronic device comprises a display on a first, front side of the device, and a touch sensitive surface on a second, rear side of the device substantially opposite the first side, the touch sensitive surface having a size similar to the display and a placement such that it is substantially coincident with the display along an axis normal to the first and second sides of the device. In other words, in normal use the touch panel is positioned behind the display and is basically the same size as the display.

The rear touch panel can then be treated as a proxy for the display screen, and the user can select buttons or move a mouse pointer or similar reticule shown graphically on the display by touching and moving over corresponding positions on the touch panel behind the screen. Due to the relative orientations of the display and the touch panel, the left-to-right (horizontal) mapping of positions on the touch panel is reversed to be consistent with positions on the display screen.

Selection of buttons and the like can be made by pressing on the rear panel (if the panel is pressure sensitive) or by tapping on the rear panel. In this latter case, the effective position of the tap is preferably where the user first broke contact with the touch panel to initiate the tap, and not where the finger (or stylus or the like) returns to when making the tapping action, as this is likely to be only approximately at the same position. Such a strategy provides accuracy when the user cannot directly see their finger or stylus in relation to the screen during the tapping action.

The applications for such a mode of input are many and varied, but include for example photo editing without obscuring the picture while the user works, lifting game objects from below and moving them around, operating picture puzzles, and navigating an e-book or movie without obscuring the words or pictures.

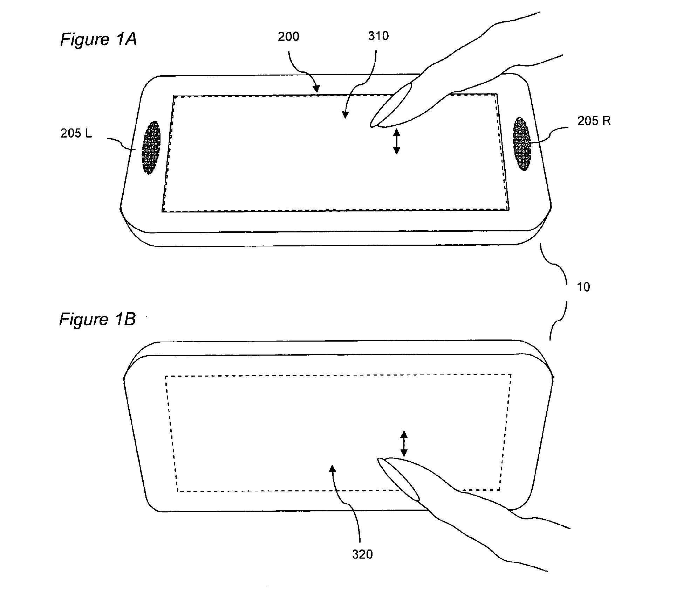

Figures 1A and 1B illustrate an embodiment of a portable electronic device (PED) 10. Figure 1A shows a notional front or top side of the PED, whilst Figure 1B shows a notional rear or bottom side of the PED. The front and rear sides are substantially parallel to one another.

On the front side, the PED comprises a display 200 and optionally one or more loudspeakers 205L, 205R. Optionally the display has a touch sensitive surface.

On the rear side, the PED comprises a rear touch sensitive surface 320 (indicated by the dotted lines) having a similar shape and orientation to the display 200 (e.g. a substantially identical shape and orientation) and a substantially similar size (e.g. a substantially identical size) to the display. The rear touch sensitive surface can be positioned so as to be substantially aligned with the display. That is to say, considered in a direction normal to the plane of the display, the rear touch sensitive surface is substantially coincident with (i.e. substantially overlies) the display.

Optionally, a transparent front touch sensitive surface 310 (indicated by the dotted lines in Figure 1A) is also provided coincident with the display 200. The front and rear touch sensitive surfaces and the display can thus have similar shapes and placements on their respective sides of the device. The touch sensitive surfaces also have a similar resolution of touch localisation.

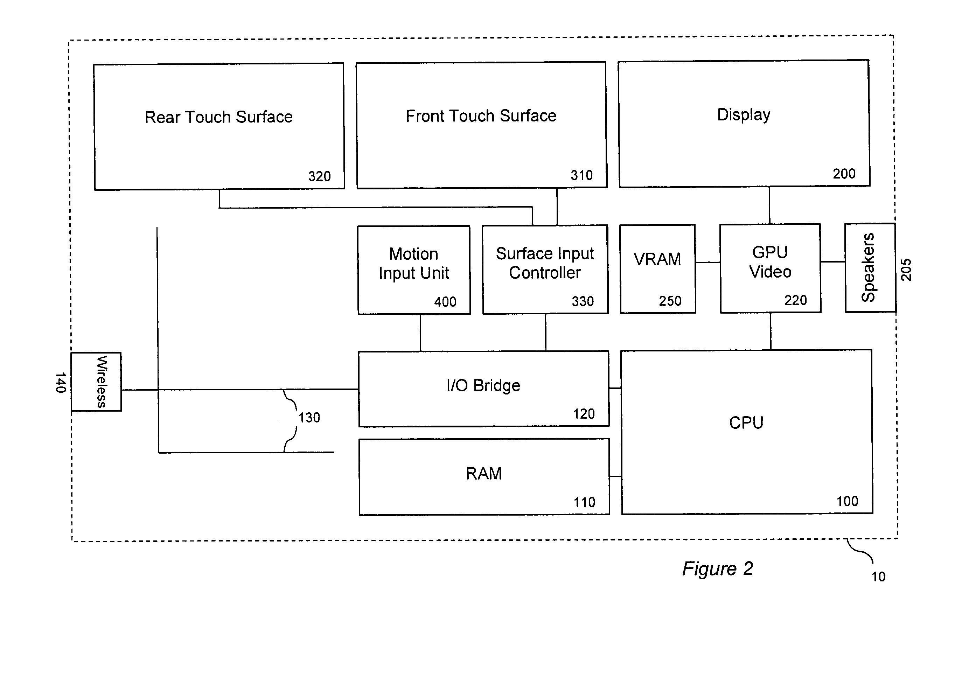

Referring now to Figure 2, an embodiment of the PED comprises a central processor (CPU) 100 coupled to random access memory (RAM) 110, and optionally to a read only memory (not shown). In addition the CPU communicates with a graphics processing unit (GPU) 220. The GPU has access to video RAM (VRAM) 250. The GPU outputs audio to loudspeakers 205L,R (only one shown for clarity) and/or to a headphone jack socket (not shown). The GPU also outputs video information to the display 200. The display is typically a liquid crystal display (LCD) but may be an organic light emitting diode display (OLED) or similar suitable display technology.

In addition, the CPU communicates with an input / output bridge (I/O bridge) 120 that co-ordinates communication with peripheral components both integral to and linkable with the PED. In an embodiment of the PED the I/O bridge communicates with a surface input controller 330, which parses inputs from the rear touch sensitive surface 320 and optionally the transparent front touch sensitive surface 310. The I/O bridge also communicates with an optional motion input unit 400 comprising one or more micro electromechanical (MEMs) accelerometers and/or gyroscopes, to provide up to six axes of motion input (x, y and z axis lateral movement and roll, pitch and yaw rotational movement). The I/O bridge also communicates with a bus 130, upon which various peripheral devices may be linked, including one or more wireless communication units 140, such as for example WiFi and / or Bluetooth Ⓡ communication units.

It will be appreciated that the CPU 100 may be a single core or multi core processor. Similarly, the RAM may be dynamic RAM or may comprise both dynamic RAM and static (e.g. flash) RAM units. Likewise, whilst the GPU typically uses dedicated VRAM, alternatively or in addition it may share common RAM with the CPU. Finally, it will be appreciated that the function of the surface input controller 330 may be performed by the CPU itself.

The rear touch sensitive surface may be a conventional capacitance touchpad or panel such as that found in laptop computers or portable telephones. Such a touchpad typically comprises two layers of parallel conductive lines separated by an insulator and arranged at right angles to one another. A high frequency signal is swept through every respective pairing of lines between the two layers. The measurable current for each pair is then proportional to the capacitance at their point of intersection. When a user's finger is placed at or near that intersection, however, some of the electrical field between layers is shunted to ground, changing the effective capacitance and hence the measured current. Precise localisation of the user's finger can be achieved by measuring changes in capacitance at nearby points of intersection, which will be proportional to their respective distances from the finger. So-called multi-touch operation of the touchpad can be achieved by detecting distinct peaks in capacitance change at separate intersection points on the pad. Meanwhile, movement of a user's finger or fingers can be estimated from successive points of intersection where contact is detected.

A front touch sensitive surface for use with the display operates in a similar manner to the rear touch sensitive surface, but in this instance the conductive lines are typically transparent (as a non limiting example, being formed by a deposition of indium tin oxide), and the insulator between two layers is provided by all or part of the display window (e.g. a glass layer); typically a further transparent protective layer is then provided on top of the upper conductive layer.

It will be appreciated however that any suitable touch sensitive technique may be used for either touch panel.

It will also be appreciated that whilst not shown in the figures for the purposes of clarity, the PED comprises power distribution lines to various components and one or more sources of power, such as an input socket (for example a conventional DC power socket, or alternatively or in addition a USB socket). Such an input socket may also be used to charge one or more batteries (also not shown). Such batteries may be user removable or may be sealed in the device. Other components not shown include, for example, an optional microphone.

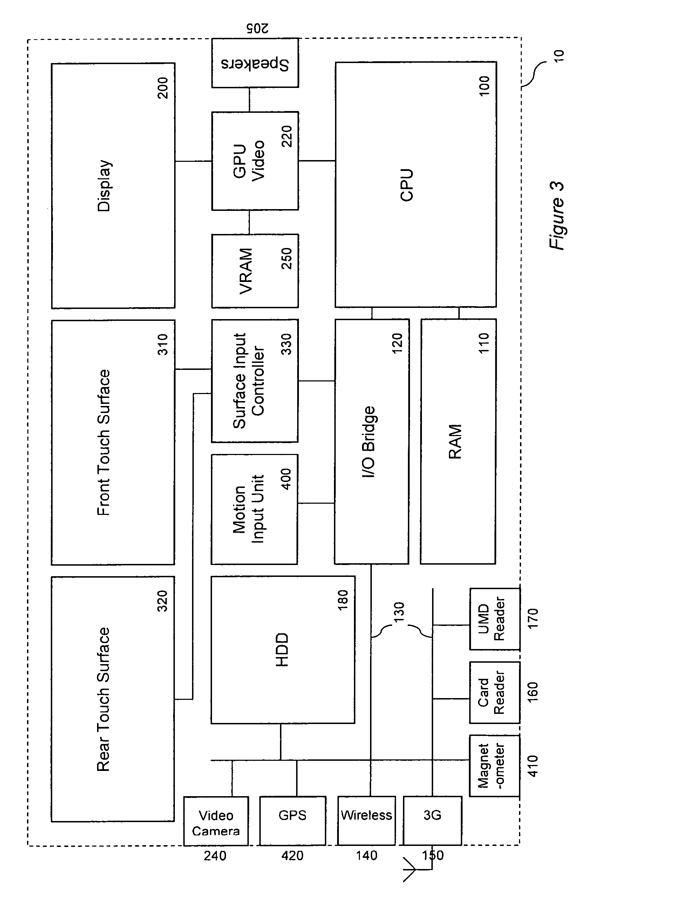

Referring now also to Figure 3, an embodiment of the PED may comprise one or more additional components, either integrated within the device or connectable to it. The additional components include, but are not limited to, the following.
a) A card reader 160 suitable for reading from and optionally writing to memory cards, such as a Sony Ⓡ Memory Stick ® card, or alternatively legacy memory cards such as those used by the Sony ® Playstation 2 ® entertainment device. Such a reader may be integral to the PED or may connect to the bus 130 via a USB connection.
b) A universal media disk (UMD) reader 170 or other optical disk reader (such as a DVD or Blu-Ray® disk reader), for accessing media and/or game content stored thereon. Such a reader may be removably connectable to the bus 130 via a USB or proprietary connection.
c) A magnetometer 410 for determining compass direction (i.e. the current absolute orientation of the PED), mounted integral to the PED either on the bus 130 or as part of the motion input unit 400.
d) A third generation (3G) or other mobile telephony module 150. in an embodiment, the module and aerial are integral to the PED, and optionally the aerial is shared with or otherwise coupled electromagnetically with other wireless units in the device for the purpose of transmission and reception. Alternatively the module may be removably connectable to the PED, for example via USB port or a Personal Computer Memory Card International Association (PCMCIA) slot.
e) A hard disk drive (HDD) 180 integral to the PED, providing bulk storage for audio / video media, downloaded games, and the like.
f) A GPS receiver 420. Again the GPS receiver may share an aerial with one or more other wireless units (such as WiFi) within the PED or may use its own aerial. Map information, where used, may be stored locally at the receiver, or in flash RAM of the PED, or on an HDD of the PED.
g) A video camera 240, typically comprising a charge coupled device (CCD) optical sensor and suitable optics for imaging onto the CCD. The resolution of the CCD may for example be 640x480 pixels, but may be any suitable resolution, such as for example 1920x1080 pixels (full HD). In an embodiment the video camera is integral to the PED, but alternatively may be removably connectable to the bus 130 via a USB or proprietary connection. An embodiment of the PED comprises two such video cameras 240, forming a stereoscopic pair.

In operation, the CPU accesses an operating system that is resident for example on a ROM, flash RAM or a hard disk. The operating system co-ordinates operation of the various functions of the PED and presents a user interface to a user of the device. The user interface will typically comprise graphical outputs via the display and touch based inputs, but may also include audio outputs and/or motion-based inputs.

The touch based inputs to the PED are peculiar to the arrangement of a display on the front of the PED and a correspondingly positioned touch sensitive surface (or 'panel') on the rear of the PED. As noted previously, this allows the user to treat the rear panel as a proxy for the display. The term proxy means, in a general sense, an entity which acts on behalf of another. In the present context, the rear touch panel acts on behalf of a touch panel associated with the display (for convenience this is sometimes abbreviated to "acting as a proxy for the display") - whether or not such a display touch panel is even provided. In other words, the user can address actions and/or inputs to the rear touch panel as if those actions and/or inputs were addressed to the display (i.e. to a touch panel associated with and/or overlying the display), and/or point to the rear panel in order to point to the display. In these operations, the CPU 100, the surface input controller 330 and the rear touch surface 320 cooperate to detect a touch on the rear touch surface and map the position of that touch to a position on the display, causing a display event (e.g. the selection of an icon, the movement of a mouse pointer, the generation of a corner of a bounding box or selection area, the operation of a control button or the like) at that corresponding display position.

Thus for example, the present proxy arrangement means that the user can point to icons or other displayed features from apparently underneath the display by touching the rear touch panel at the corresponding position.

It will be appreciated that unlike a laptop touch panel, the rear touch panel can have a substantially 1:1 scale relationship with the screen if it is the same size, thereby not just enabling motion of a mouse pointer on screen that corresponds to motion of touch on the panel (for example), but furthermore also enabling direct placement of such a mouse on the screen at the position corresponding to the touch on the panel, because as noted above the panel can be understood to represent the screen (i.e. act as a literal proxy).

As noted previously, because of the relative orientation of the display and the rear touch panel, left-to-right mapping with respect to the rear touch panel is therefore reversed to correspond to the appropriate position with respect to the display. Thus a left-to-right action (as viewed facing the rear touch panel) corresponds to a right-to-left event being viewed on the display. Therefore from the user's perspective facing the display, a right to left action (from the user's perspective) on the touch panel behind the display results in a corresponding right to left event being viewed in the display. In other words, a touch input with respect to the touch panel (which faces in substantially the opposite direction to the display), is mapped to a corresponding position with respect to the display that is horizontally reversed, such that the touch and the display position overlie one another with respect to a common viewpoint (a view from the side of the device having the display).

Optionally this direction reversal is switchable depending on the orientation of the device as detected by the motion input unit, and/or according to what peripheral devices are connected; for example if the PED were connected to a television and then held display-down for use, the left-to-right mapping of the touch panel input may not be reversed.

Again as noted previously, use of the rear touch panel as a proxy for the display advantageously allows interaction with the graphical output of the device without the user's hand or fingers obscuring the display or marking the display window.

In addition, the subjective experience of controlling the displayed interface from behind or underneath the screen allows for new modes of user interaction; for example selection, highlighting or magnification of a screen element may be achieved by a user pushing the element 'toward' them (i.e. with finger pressure on the rear panel) from behind the device. For a capacitance based touch panel, an increase in pressure on the rear panel (i.e. a push) can be detected by a flattening of the user's finger, which results in a larger covered area and hence more points of intersection in the panel having reduced capacitance. Conversely a reduction in pressure reduces the number of intersection points where touch is detected.

In conjunction with a similar but transparent front touch sensitive surface overlaid on the display, further modes of interaction become possible. For example, objects may be selected by being pinched between thumb and forefinger, with the thumb and forefinger touching the front and back touch panels respectively. The object may then be moved around, and, for example, activated by using a squeezing action between thumb and forefinger.

Further modes of interaction rely on the correspondence between position and / or motion of the user's fingers on the two touch panels. For example in a video playback application, stroking a finger across only the top touch panel may be interpreted as a fast-forward or rewind command (depending on direction), whilst a pinch hold followed by corresponding movement left or right of both fingers may be interpreted as selection of a specific point in playback (i.e. where the total playback time is scaled to the width of the touch panels). By contrast, however, a pinch hold followed by both fingers moving in opposite directions to each other may be interpreted as a twisting action, and adjusts a virtual volume dial. A similar grammar of interaction could be used for example for document or e-book navigation, with scrolling, page selection and zoom replacing the above playback functions.

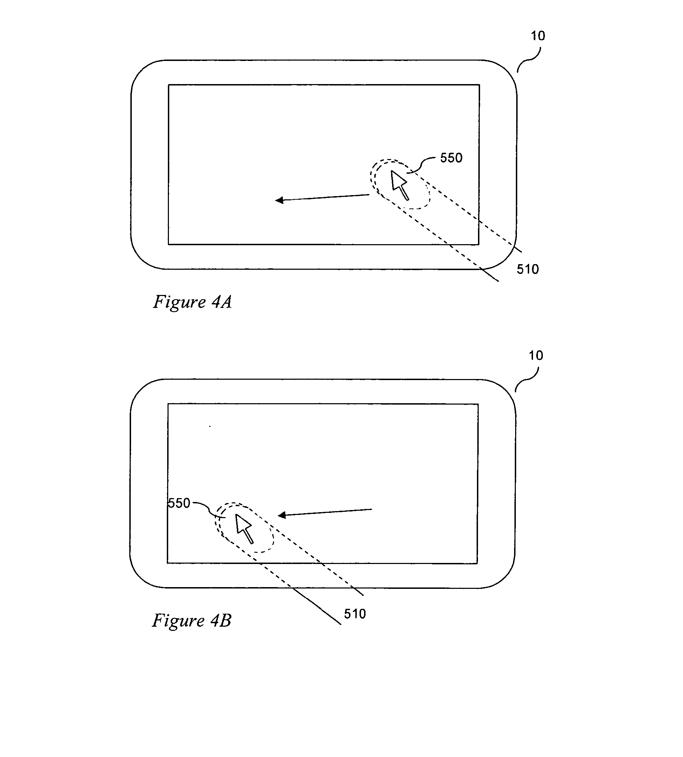

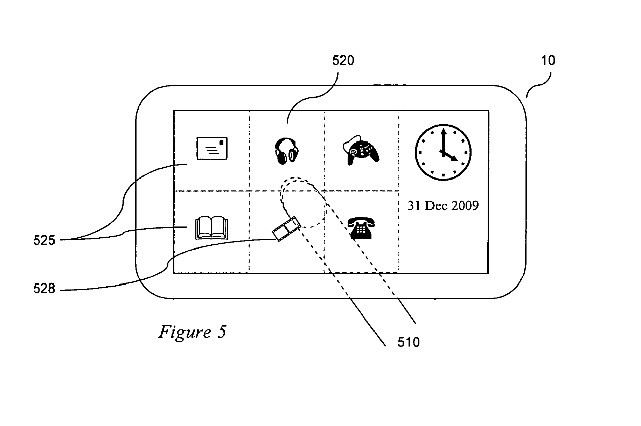

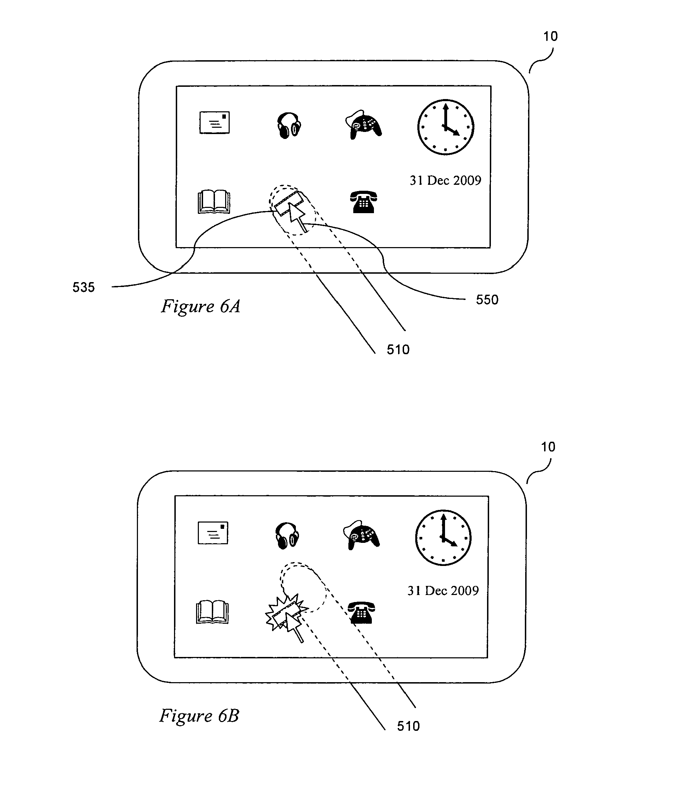

Referring now to Figures 4A and 4B, in an embodiment of the present invention the rear touch panel can act as a proxy for the front screen or display in several ways, one of which is as a pointer to a region of the screen. In Figures 4A and 4B, a PED is viewed from the front, i.e. looking towards the display. A user is manipulating his finger against the rear touch panel. Of course, in reality the finger at the rear touch panel would not be visible from the front of the PED, but for clarity of explanation the position of the finger is shown in dotted lines. A similar representation applies to Figures 5, 6A and 6B. Motion of the user's finger in Figures 4A and 4B (relevant in particular to the discussion of Figure 4B below) is indicated by a near-horizontal arrow.

In Figure 4A, the user's finger 510 touches the rear panel at a particular position, and in response the device displays a mouse arrow, reticule or similar indicator 550 on the display at the corresponding position. Here, note that the horizontal axis of the rear touch panel is reversed for this purpose as the rear panel is facing the opposite way to the screen. So the "corresponding position" means the same position, when considered in a direction normal to the plane of the display. That is to say, the indicator 550 overlies (e.g. appears directly over) the finger position when considered in a direction normal to the plane of the display.

In Figure 4B, when the user moves their finger across the touch panel, the mouse arrow 550 moves in a corresponding fashion on the display. In this way, the user can intuitively navigate the display screen from 'beneath' the displayed image.

These techniques are also applicable to multi-touch arrangements in which more than one touch position can be detected simultaneously. Multi-touch systems are sometimes used so that two touch positions (or two most outlying touch positions if there are more than two) define diagonally opposite corners of a selection area or bounding box on a display. A multi-touch example of the present proxy technique is that a highlighted area is defined on the display whose opposing corners correspond to the positions of the two outlying fingers on the rear panel; in this case if the user moves their fingers then the highlighted area changes accordingly. Such an area may be used for selection purposes or to zoom a picture, for example. Other representations of multi-touch for different applications will be apparent to the skilled person.

Referring now also to Figure 5, it will be appreciated that the user will have a good physical sense of where their finger is positioned (i.e. an intrinsic feel for the relative position of their finger), and hence where it will touch on the rear panel. However, without visual confirmation (for example by a corresponding mouse arrow on screen), this positional sense may not be accurate enough for the user to precisely select an icon on the screen with a first tap of the rear panel.

Consequently in an embodiment of the present invention, one or more icons 525 displayed on the screen are associated with one or more respective regions 520 of the rear panel, where such regions are substantively larger than the corresponding displayed icons, and typically bound each other seamlessly as seen in Figure 5. The regions are shown on Figure 5 as boxes bounded by dotted lines, so that the edge of one box is directly adjacent to the edge of the next box. In this way, the boxes are larger than the icons 525 themselves.

These regions can be arranged regularly as shown, or their dimensions can be a function of the distance between icons as they appear on screen, if this is not regular. An icon is detected according to which region receives the largest touch signal as detected by the touch panel and surface input controller. In the illustrated example, this will be the lower central icon 528.

In this way, the area of control on the rear touch panel associated with each icon is enlarged (with respect to the size of the displayed icon) for the user, and an approximately placed first touch of the rear panel to select an icon or similar virtual button (such as a number on a key pad) can be more easily disambiguated - i.e. the correct icon, as required by the user, can be more easily detected.

In the discussion of Figure 5, the term "icon" could equally be taken as "user control" such as a control button or a keyboard button. So, for example, the techniques described with reference to Figure 5 could apply to text and/or numeric input operations of a keyboard, or indeed any type of displayed user control button. Each such user control has one or more associated operations of the device. In the case of a keyboard button, the operations could include typing a letter or number. In the case of an icon, the operations could include simply selecting that icon, and/or initiating a function associated with the icon. In the case of a generic control button, the operation is whatever is initiated by user activation of that control button.

Referring now to Figures 6A and 6B, a combination of the above two approaches can be considered in order to accurately select any arbitrary point on the screen. As described previously with reference to Figures 4A and 4B, a mouse pointer is displayed on screen at a position corresponding to the user's finger or stylus on the rear touch panel, enabling the user to accurately navigate around the screen with the benefit of this visual feedback. In Figure 6A, as a result the user has accurately localised the mouse pointer over a desired icon 535 (although it will be appreciated that this could be any screen element, including, for example part of a photo being selected for red-eye or blemish reduction, or an object in a game, etc).

In Figure 6B, the user selects the icon by tapping the rear touch panel - a process that involves breaking contact with the rear touch panel momentarily, before touching it again. Accordingly the CPU 100, the surface input controller 330 and the rear touch surface 320 cooperate to provide a tapping detection arrangement, which detects a tap as an instance of a loss and reacquisition of touch from the user on the touch sensitive surface. Whilst the user will consciously or unconsciously intend to tap the panel at the same position desired position as displayed by the mouse, this cannot be guaranteed because to the approximate nature of the user's sense of physical position as described previously.

Therefore in an embodiment of the present invention, the location of the tap action is detected, recorded and/or signalled as the location at which the user broke contact with the touch panel (i.e. where contact was lost), and not where touch from the user is subsequently reacquired (and, indeed, not where the first touch was initiated). This enables the user to select the displayed screen element independently of the accuracy of their tapping action.

It will be appreciated that various optional refinements to this approach are possible.

Firstly, the momentary loss of contact with the touch panel when the tap is initiated may be subject to a maximum predetermined threshold period (for example 300, 200 or 100 milliseconds), after which any subsequent re-establishment of contact by the user is not considered to be a tap.

Secondly, a tolerance or perimeter (i.e. a predetermined threshold distance) around the location or position at which the user broke contact with the touch panel can be applied, so that subsequent re-establishment of contact by the user outside that perimeter (i.e. at more than the threshold distance from the position of breaking contact) is not considered to be a tap. This (optionally in combination with the threshold period mentioned above) serves to distinguish between an approximate tap at an intended location and a wholly new input intended for elsewhere on the user interface.

Thirdly, alternatively or in addition, if the re-established contact by the user is static (substantially stationary) and prolonged (i.e. beyond another predetermined threshold duration) or the user simply resumes movement of the mouse pointer, then the loss of contact is not interpreted as a tap.

Moreover, any of these checking mechanisms may have one or more thresholds, with interim thresholds triggering a request to disambiguate the command. Thus, by way of a nonlimiting example, a momentary loss of contact up to 200 milliseconds long is treated as a tap, whilst a momentary loss of contact between 200 and 300 milliseconds long results in the word 'Select?' appearing next to the mouse, inviting a repeat confirmatory tap, whereas a momentary loss of contact of more than 300 milliseconds is classified as not being a tap and no action or confirmatory request is made.

These thresholds may be user-defined or selected as a group via a set of profiles (e.g. slow or fast reaction profiles).

As noted previously, in addition to the benefits of not obscuring or marking the display, the use of a rear-mounted touchpad, and hence an interaction with the screen based upon pushing up into the screen instead of pushing down into the screen (as with conventional touch screens) invites new forms of user interface and user interaction.

### Examples include:

- In game terrain deformation, e.g. pushing the ground up from below at the point of contact to generate an obstacle;
- Being able to lift objects from below, and then move and place them, for example to stack objects and solve puzzles, or lift and place a record stylus in a DJ game;
- Using multi-touch, control two or more limbs of a character, e.g. for running, climbing, boxing, or rag-doll kung-fu style games, without continually obscuring the character;
- Navigating through an electronic comic or other static document;
- Pushing up through layers of data, for example to cycle through a digital rolodex; or in conjunction with a front touch screen, to move in and out of a game's depth axis (for example in a pseudo-3D sideways scrolling platform game).
- Drag objects to the edge of the screen to delete them;
- Using multitouch, drag an object to the position where the user is holding the back of the device (as detected by the rear touch panel) to denote that this object is to be stored or held (e.g. in a clipbook), so that subjectively the action is to drag the object into the user's hand for safekeeping; and
- In conjunction with a front touch screen, provide a high security button that requires activation from both front and rear (e.g. a 'delete' button or keypad unlock button), or similarly, the order in which a control is accessed via the front and rear panels affects its operation.
- In conjunction with a front touch screen, pinch the device (e.g. between thumb and forefinger) to pin an object at that position, or to act as a pivot for that object, enabling it to be rotated about the pivot using a free finger.

Other examples will be apparent to the skilled person.

In addition, gestures may be used on the rear touch panel to activate certain functions. Advantageously, where a conventional touch screen is also provided, this allows simple gestures to have different uses on the front and rear touch surfaces, so expanding the repertoire of gesture based controls available to the user.

### Examples include:

- An erase or delete gesture, comprising a rapidly oscillating movement on the rear touch panel;
- A tearing gesture, comprising for example a rapid motion from top to bottom to the rear touch panel, for example to tear a selection out into a clipboard;
- A transmit gesture, comprising for example a rapid diagonal gesture away from the user, for example to transmit a currently open document, or a pre-set e-business card;
- A whole-hand wipe across the rear panel to reset an application, or return to a default state (e.g. return to a browser homepage); and
- A circular gesture to adjust a parameter such as volume, or to turn the page of an e-book;

Other examples will be apparent to the skilled person.

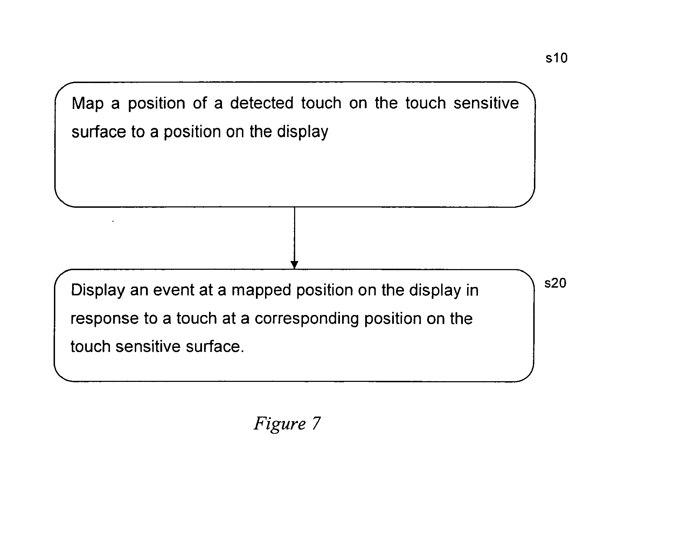

Referring now to Figure 7, a method of control of an electronic device of the type described above comprises:
in a first step (s10), mapping a position of a detected touch on the touch sensitive surface to a position on the display; and
in a second step (s20), displaying an event at a mapped position on the display in response to a touch at a corresponding position on the touch sensitive surface.

It will be apparent to a person skilled in the art that variations in the above method corresponding to operation of the various embodiments of the apparatus as described and claimed herein are considered within the scope of the present invention, including but not limited to:
- placing regions around displayed controls and detecting whether a touch (or the majority of a detected touch) on the rear panel corresponds to a position within such a region, and if so selecting or similarly engaging, enacting or facilitating the operation of the control;
- displaying an indicator such as a mouse pointer at a position on the display corresponding to the position of touch on the rear panel, taking account of horizontal reversal of the mapping between panel and display so that the mouse appears to track directly above the point of touch, e.g. appearing to follow the user's finger;
- detecting a tap as a brief or momentary release and re-touch of the rear panel by the user, and using the last detected position prior to release as the position of the tap, so that when a pointer is being used to track the user's touch, the position of the pointer when the user lets go of the rear panel, and not the position of the pointer when they re-touch the panel to complete a tapping action, is selected. Indeed, the pointer may not be updated at all at this time if the tapping action is detected to be a valid tapping action);
- Such a tapping action can be made subject to a number of validations (e.g. time and position thresholds) as described previously herein;
- inputs to the device can therefore also include gestures conducted on the rear panel, for example by tracing a finger over the panel in a specific pattern or shape;
- in conjunction with a touch sensitive surface on the display as described previously herein, inputs to the device can therefore also include a combination of touches and/or gestures on both sides of the device;
- for example, an input on a touch screen relating to a high security function may require a corresponding input from the rear touch panel to demonstrate that selection of the function was not accidental; the input to the rear touch panel may correspond to the same location on the screen as that from the touch screen or to a separate confirmation area.

Finally, it will be appreciated that the methods disclosed herein may be carried out on hardware suitably adapted as applicable by software instruction or by the inclusion or substitution of dedicated hardware.

Thus the required adaptation to existing parts of a device may be implemented in the form of a computer program product or similar object of manufacture comprising processor implementable instructions stored on a data carrier such as a floppy disk, optical disk, hard disk, PROM, RAM, flash memory or any combination of these or other storage media, or transmitted via data signals on a network such as an Ethernet, a wireless network, the Internet, or any combination of these of other networks, or realised in hardware as an ASIC (application specific integrated circuit) or an FPGA (field programmable gate array) or other configurable circuit suitable to use in adapting the device.

## Claims

1. A portable electronic device, comprising:
a display on a first, front side of the device;
a touch sensitive surface on a second, rear side of the device substantially opposite the first side; and
a touch input mapping means arranged to map a position of a detected touch on the touch sensitive surface to a position on the display; in which
the touch sensitive surface has a similar shape and orientation to the display; and
a touch at a position on the touch sensitive surface causes a display event at a corresponding position on the display.

2. A portable electronic device according to claim 1, in which
the touch sensitive surface is placed on the rear side of the device such that it is substantially coincident with the display on the front side of the device along an axis substantially normal to the display.

3. A portable electronic device according to claim 1 or claim 2, in which the touch sensitive surface is substantially the same size as the display.

4. A portable electronic device according to any one of the preceding claims, in which the mapping means is operable to map a touch input with respect to the touch sensitive surface, which surface faces in substantially the opposite direction to the display, to a corresponding display position with respect to the display that is horizontally reversed, such that the touch and the display position overlie one another when viewed from the side of the device having the display.

5. A portable electronic device according to claim 4, in which
the device is arranged in operation to associate a position of a detected touch on the touch sensitive surface with a corresponding position on the display, and to display an indicator at the corresponding position on the display, the placement and size of the display and touch sensitive surface causing the indicator to appear on the display substantially directly over the position of touch on the touch sensitive surface.

6. A portable electronic device according to claim 4 or claim 5, in which one or more user controls are displayed, each user control being associated with one or more respective operations of the device; in which:
the device is operable to detect a position of a detected touch on the touch sensitive surface within a region including a position corresponding to the display position of a user control, and being larger than the display size of that user control; and to initiate the operation(s) associated with that user control in response to such a detection.

7. A portable electronic device according to any one of the preceding claims, comprising
a tapping detection means; wherein
the tapping detection means is arranged in operation to detect a tap as when there has been a loss and reacquisition of touch from a user on the touch sensitive surface; and
the tapping detection means is arranged in operation to detect the position of the detected tap on the touch sensitive surface as being the position at which touch was lost.

8. A portable electronic device according to claim 7, in which the tapping detection means is operable so that the detection of a tap is conditional upon one or more selected from the list consisting of:
i. the duration of loss of touch being less than a predetermined threshold period;
ii. the position of reacquired touch being within a predetermined threshold distance of the position at loss of touch;
iii. the reacquired touch itself being of less than a predetermined threshold duration; and
iv. the reacquired touch remaining substantially static for more than a predetermined threshold duration.

9. A portable electronic device according to any one of the preceding claims, in which:
the display has a further touch sensitive surface; and
inputs to the device comprise inputs from both the touch sensitive surfaces.

10. A method of controlling a portable electronic device, the portable electronic device having a display on a first, front side of the device and a touch sensitive surface on a second, rear side of the device substantially opposite the first side, the method comprising the steps of:
mapping a position of a detected touch on the touch sensitive surface to a position on the display; and
displaying a display event at a mapped position on the display in response to a touch at a corresponding position on the touch sensitive surface.

11. A method according to claim 10, comprising the steps of:
associating a position of a detected touch on the touch sensitive surface with a corresponding position on the display; and
displaying an indicator at the corresponding position on the display;
in which the placement and size of the display and touch sensitive surface cause the indicator to appear on the display substantially directly over the position of touch on the touch sensitive surface.

12. A method according to claim 10 or claim 11, comprising the steps of:
displaying one or more user controls, each associated with one or more respective operations of the device;
detecting a position of a detected touch on the touch sensitive surface within a region including a position corresponding to the display position of a user control, and being larger than the display size of that user control; and
initiating the operation(s) associated with that user control in response to such a detection.

13. A method according to any one of claims 10 to 12, comprising the steps of:
detecting a tap as an incident of a loss and reacquisition of touch from a user on the touch sensitive surface; and
detecting the position of the tap as being the position on the touch sensitive surface at which touch was lost.

14. A computer program for implementing any one of claims 10 to 13.
